# EUROPEAN PATENT SPECIFICATION

(11) **EP 0 694 253 B1**
(45) Date of publication and mention of the grant of the patent: **12.04.2000**
(21) Application number: 95500105.2
(22) Date of filing: 19.07.1995
(51) Int. Cl.: A01J 25/13, B29C 37/00

(54) **Mould for the formation of cheeses and method for its manufacture**
Käseform und Herstellungsverfahren
Moule à fromages et méthode de fabrication

(30) Priority: 29.07.1994 ES 9401676
(43) Date of publication of application: 31.01.1996
(73) Proprietor: MECANIZADOS BUSQUI, S.L., 08191 Rubi (Barcelona) (ES)
(72) Inventor: Busqui Llorens, Martin, E-08190 Sant Cugat del Vallès (Barcelona (ES)
(74) Representative: Ponti Sales, Adelaida

(56) References cited:
- EP-A- 0 344 845
- EP-A- 0 379 752
- FR-A- 1 270 357
- FR-A- 2 384 447
- FR-A- 2 447 677
- FR-A- 2 558 684

## Description

The present invention relates to a mould for the formation of cheeses and to the method for manufacturing it.

### BACKGROUND OF THE INVENTION

Moulds for the formation of cheeses are currently manufactured in several pieces, which are subsequently joined together. The moulds have to be manufactured in different parts due to the fact that they have grooves to imitate the fabric of certain cheeses.

These types of moulds usually have a tubular wall, a base and a cover. Both parts of the mould are manufactured separately, with the base being subsequently joined to the tubular wall. There also exist moulds which include a pair of flanges on the ends of the tubular wall, in which case one of the flanges is usually formed on the same piece as the tubular wall, while the other flange has to be joined on subsequently. The function of the flanges is to keep the moulds separated on a conveyor belt, one beside the other, and to place them on top of each other.

The manufacturing process for the tubular wall of said moulds for cheese (hereinafter called "piece" to simplify the description) in plastic moulds usually consists in heating the mould in order to inject therein plastic material intended to fill the space existing between said mould and a core. The assembly formed by the mould and core, with the material inside it, is kept hot until the piece polymerizes, and is then cooled for a certain time to extract it. The drawing of the piece is always carried out when the piece has solidified in order to allow extraction thereof, which is achieved thanks to suitable means of cooling.

To extract the piece with grooves on the interior walls it is also necessary that the diameter of the core can be reduced, the core contracting before the piece is removed. Expandable cores are generally used to obtain the right diameters.

With the known method it would not be possible to manufacture the mould if the core were not expandable.

The grooves on the mould are made in order to imitate the roughness presented by cheeses produced in artisan fashion. As moulding cannot be used to produce the grooves on the moulds of some types of cheeses, those grooves must be made later by machining.

Utility model no. 8702041 describes another method for formation of the rough exteriors on cheeses, which consists in inserting into the mould a liner provided with the aforesaid grooves, which liner is extracted from the mould along with the cheese. Drawing of said liner is possible thanks to it being provided with a side slot and thus not forming a closed tube.

Moreover, the mould for cheeses is made from a tubular piece and a base, that is, using two pieces which must be joined together, which is another disadvantage which could be avoided if it was made from a single piece.

According to this utility model the internal surface of the mould presents roughness formed by means of mechanical treatment.

European patent EP-A-0 344 845 refers to grooves and incisions made in the mould. In particular, it claims as characteristics incisions made by blades of small thickness in order to facilitate draining off of the whey. Said incisions are therefore very narrow, so that particles of cheese do not penetrate into them, and they therefore leave no relief on the rind of the cheese.

FR-A-2 384 447 refers to a cheese mould which comprises a tubular wall and a base which closes off said tubular wall at one end formed of a single piece.

FR-A-1 270 357 discloses a method for manufacturing moulded caps provided with an internal thread. The cap is drawn immediately after the moulding, when the material is still hot and relatively elastic.

FR-A-2 558 684 refers to a cheese mould made of a single piece, which comprises a tubular wall and a base. The tubular wall is provided with vertical grooves for drainage.

### DESCRIPTION OF THE INVENTION

The mould and the method of the invention manage to resolve the aforesaid disadvantages, presenting other advantages, which will be described.

The method for the manufacture of moulds of plastic material for the formation of cheeses consists in injecting plastic material between a mould and a core, subsequently drawing the piece formed, and it is characterized in that the drawing of the formed piece is carried out at a piece temperature of between 100 and 150°C, without forced cooling of either mould or core, the latter being kept at a temperature between 90 and 120°C.

Unlike the methods currently used, this characteristic permits the drawing to be carried out not when the formed piece has cooled down completely, but rather when the temperature has fallen, not in forced manner, down to a temperature which permits it to be drawn from the mould thanks to the elasticity of the material used. Thus, the single-piece mould described above is obtained, provided with interior grooves. The grooves are therefore made directly by moulding, without the need for subsequent machining as is usual in the known technique.

It is important to stress that the method of the invention is different from the technique currently used for the moulding and drawing of plastic pieces, since the traditional technique does not allow production of single-piece moulds provided with interior grooves.

The method is also characterized in that the moulding time is between 3 and 7 minutes, so that moulding time is speeded up because drawing is carried out before the piece has cooled down completely.

Also adventageously, the plastic materials used to manufacture the piece are copolymers, polypropylenes or polyethylenes, suitable for carrying out this method thanks to their physical characteristics, especially their elasticity.

The method may optionally include a subsequent machining similar to that described in utility model 8702041.

The mould of the invention comprises a tubular wall and a base which closes off said tubular wall at one end formed of a single piece, and is characterized in that it comprises inclined grooves on the tubular wall.

### BRIEF DESCRIPTION OF THE DRAWINGS

For a better understanding of all that has been set out, some drawings are attached in which, schematically and only by way of non-restrictive example, several embodiments of the oven of the invention are shown, together with the results obtained with the method of the invention.

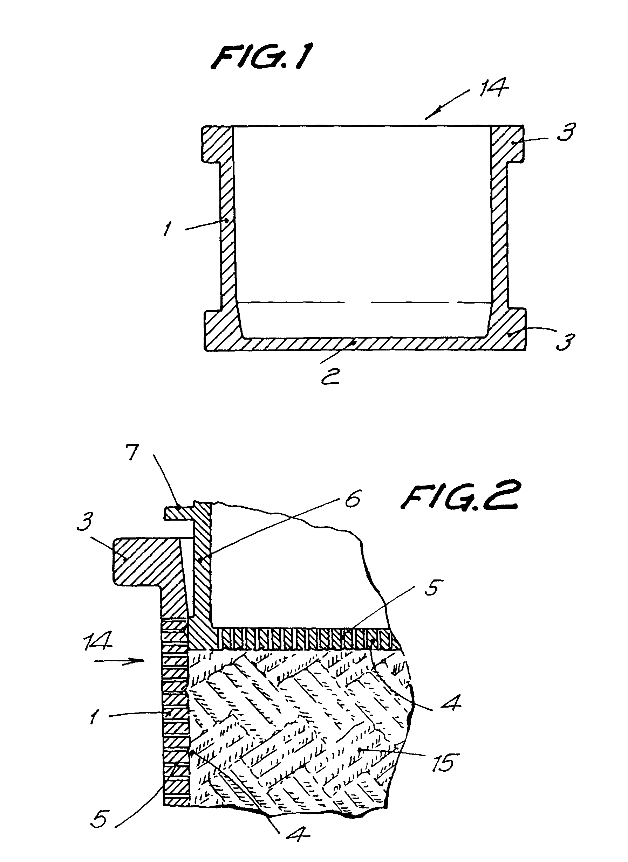

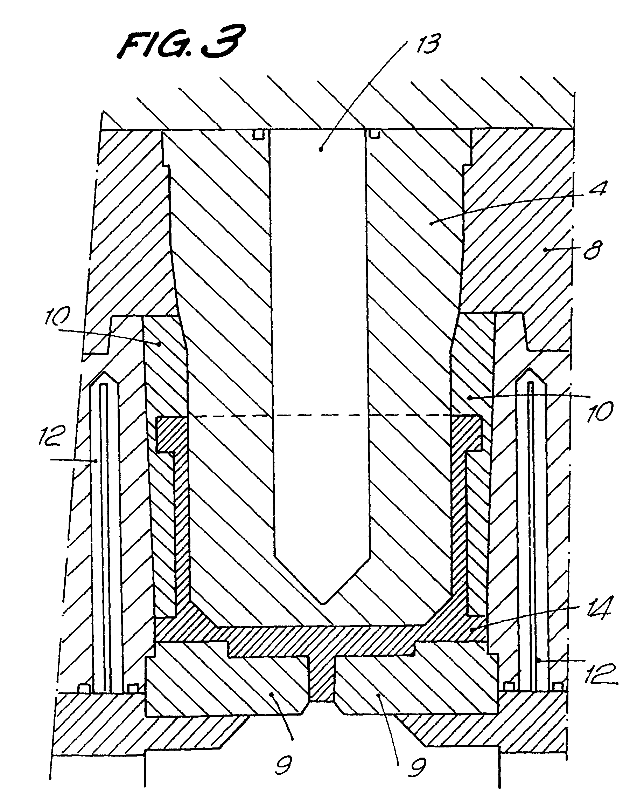

Figure 1 is an elevation view of the sectioned mould for the formation of cheeses; figure 2 is a detail in cross-section of the sectioned cover and mould; and figure 3 is a cross-section elevation view of the components used in the method.

### DESCRIPTION OF A PREFERRED EMBODIMENT

Figure 1 shows an embodiment of the mould 14, which comprises a tubular wall 1, a base 2 and a pair of flanges 3. It is important to stress that the tubular wall 1, the base and the flanges 3 are made of one single piece.

Figure 2 shows that the tubular wall 1 of the mould 14 presents grooves 4 on its interior surface and is provided with perforations 5. A cover 6 can also be seen, which is also provided with grooves 4 and perforations 5, and acts as a piston to press the cheese 15.

Figure 3 shows the elements used in the piece manufacturing method, which are a mould 8, a detachable lower member 9, a detachable side member 10, a core 11 and means for heating the mould and the core 12, 13.

The method starts with heating of the mould 8 by flow of hot oil, up to a temperature of about 55°C. The core 11 is also heated at the same time, also by means of flow of hot oil, up to a temperature of about 100°C, thus achieving expansion thereof.

Once the mould 8 has been heated, the plastic material 14 is injected at about 200°C. When a time period of 4 to 5 minutes have passed the temperature of the plastic material falls from 200°C down to 120°C without forced cooling thereof. In its turn, the core 11 is kept at 100°C, thus contracting only enough to allow extraction of the formed piece 14. Drawing of the formed piece can be carried out thanks to the elasticity of the plastic material.

Returning to Figure 2, formation of the cheese 15 in the mould 14 can be seen. As stated above, the cover 6 shapes the top part of the cheese.

The perforations 5 allow supply of the liquid produced when the cheese 15 is formed. The grooves 4 lend the cheese 15 its characteristics roughness.

Once the cheese 15 is extracted, the mould 14 and the cover 6 are stored until the next moulding operation. The flanges 3 facilitate storage and stacking of the moulds.

The cover 6 remains inside the mould 14 during storage and is removed therefrom to mould a new cheese 15.

The cover 6 has an abutment flange 7 which prevents the cover 4 from penetrating too far into the mould and thus being difficult to remove.

## Claims

1. A method for the manufacturing of moulds of plastic material for the formation of cheeses, consisting in injecting plastic material (14) between a mould (8) and a core (11) and subsequently drawing the formed piece, characterized in that said drawing of the formed piece takes place when the plastic material is at a temperature of between 100 and 150°C, without forced cooling of either mould (8) or core (11), the latter being kept at a temperature of between 90 and 120°C.

2. A method, as claimed in Claim 1, characterized in that the moulding time is between 3 and 7 minutes.

3. A method, as claimed in any of Claims 1 or 2, characterized in that the plastic materials used for making the piece are polypropylenes or polyethylenes.

4. Mould for the formation of cheeses, comprising a tubular wall (1) and a base (2) which closes off said tubular wall (1) at one end formed of a single piece, characterized in that it comprises inclined grooves (4) on the tubular wall.

## Patentansprüche

1. Herstellungsverfahren von aus Plastikmaterial bestehenden Formen zur Formgebung von Käse mit folgenden Schritten: Einspritzen von Plastikmaterial (14) zwischen eine Form (8) und einem Kern (11) und anschließend Ziehen des geformten Teils,
dadurch gekennzeichnet,
daß das Ziehen des geformten Teils bei einer Temperatur des Plastikmaterials zwischen 100 und 150°C ohne eine Zwangskühlung sowohl der Form (8) als auch des Kerns (11) stattfindet, wobei letzterer auf einer Temperatur zwischen 90 und 100°C gehalten wird.

2. Verfahren nach Anspruch 1,
dadurch gekennzeichnet,
daß die Formungszeit zwischen 3 und 7 Minuten beträgt.

3. Verfahren nach einem der Ansprüche 1 oder 2,
dadurch gekennzeichnet,
daß die zur Herstellung des Teils verwendeten Plastikmaterialien Polypropylene oder Polyethylene sind.

4. Form zur Formgebung von Käse mit einer rohrförmigen Wand (1) und einer Basis (2), welche die rohrförmige Wand (1) an einem Ende abschließt, wobei die rohrförmige Wand und die Basis aus einem Stück gebildet sind,
dadurch gekennzeichnet,
daß die Form schräg verlaufende Rillen (4) an der rohrförmigen Wand aufweist.

## Revendications

1. Procédé de fabrication de moules en matière plastique pour la formation de fromages, consistant dans l'injection d'une matière plastique (14) entre un moule (8) et un noyau (11) et ensuite le retrait de la pièce formée, caractérisé en ce que ledit retrait de la pièce formée s'effectue quand la matière plastique est à une température entre 100 et 150°C, sans refroidissement du moule (8) ou du noyau (11), ce dernier étant maintenu à une température entre 90 et 120°C.

2. Procédé selon la revendication 1, caractérisé en ce que la durée de moulage est comprise entre 3 et 7 minutes.

3. Procédé selon l'une quelconque des revendications 1 ou 2, caractérisé en ce que les matières plastiques utilisés pour fabriquer la pièce sont des polypropylènes ou des polyéthylènes.

4. Moule pour la formation de fromages, comprenant une paroi tubulaire (1) et une base (2) qui obture ladite paroi tubulaire (1) à une extrémité formées en une seule pièce, caractérisé en ce qu'il comporte des rainures inclinées (4) sur la paroi tubulaire.
